## Europäisches Patentamt
## European Patent Office
## Office européen des brevets

(19)

(11) Numéro de publication : **0 030 197 B2**

(12) ## NOUVEAU FASCICULE DE BREVET EUROPEEN

(45) Date de publication du nouveau fascicule du brevet : **21.11.91 Bulletin 91/47**

(51) Int. Cl.⁵ : **B60T 11/16, F16J 15/16**

(21) Numéro de dépôt : **80401724.2**

(22) Date de dépôt : **02.12.80**

(54) **Générateur de pression hydraulique.**

(30) Priorité : **03.12.79 FR 7929668**

(43) Date de publication de la demande : **10.06.81 Bulletin 81/23**

(45) Mention de la délivrance du brevet : **22.12.82 Bulletin 82/51**

(45) Mention de la décision concernant l'opposition : **21.11.91 Bulletin 91/47**

(84) Etats contractants désignés : **DE GB IT**

(56) Documents cités : **DE-A- 832 858**

(56) Documents cités :
**DE-C- 832 858**
**DE-C- 940 450**
**FR-A- 2 421 090**
**GB-A- 1 065 599**
**US-A- 2 322 071**
**US-A- 2 793 501**

(73) Titulaire : **BENDIX France**
**126, rue de Stalingrad**
**F-93700 Drancy (FR)**

(72) Inventeur : **Carre, Jean Jacques**
**100, Avenue du Président Wilson**
**F-93100 Montreuil (FR)**

(74) Mandataire : **Timoney, Ian Charles Craig et al**
**BENDIX FRANCE Division Technique Service**
**Brevets Bendix Europe 126, rue de Stalingrad**
**F-93700 Drancy (FR)**

EP 0 030 197 B2

## Description

L'invention concerne un générateur de pression hydraulique utilisable par exemple en tant que maître cylindre de système de freinage pour véhicule ou encore en tant qu'émetteur de système d'embrayage.

Plus particulièrement, l'invention vise un générateur de pression du type comprenant un boîtier muni d'une cavité dans laquelle coulisse un piston susceptible de coopérer avec une coupelle annulaire d'étanchéité montée fixe par rapport audit boîtier pour diviser ladite cavité en une chambre de pression et une chambre d'alimentation basse pression, ladite coupelle présentant une section radiale sensiblement en forme d'un U ouvert vers la chambre de pression et présentant une branche interne et une branche périphérique, ladite branche périphérique coopérant de manière étanche avec la paroi de ladite cavité et ladite branche interne étant susceptible de coopérer de manière étanche avec la surface externe du piston.

Un tel générateur est décrit et représenté dans le brevet DE-A-832 858.

Le problème rencontré dans l'utilisation d'un tel générateur est le suivant: lorsque le piston de commande est brutalement relâché après avoir effectué une course de compression, son retour vers sa position de repos peut s'effectuer plus rapidement que le retour du fluide chassé vers le circuit de service lors de cette course de compression. Il peut alors régner, de manière transitoire, dans la chambre de pression une pression inférieure à la pression atmosphérique dont peuvent résulter des entrées d'air parasites dans le générateur et/ou certaines parties du circuit de service.

On a proposé de résoudre ce problème général dans le dispositif décrit dans le brevet Allemand cité ci-dessus par le fait que la branche intérieure de la coupelle d'étanchéité consiste en une lèvre susceptible de s'écarter du piston lorsque la pression régnant dans la chambre de pression est inférieure à la pression atmosphérique.

Néanmoins, on remarquera que ce dispositif présente l'inconvénient suivant:

Lors de la course de retour du piston, ce dernier exerce sur la lèvre intérieure de la coupelle un effort de traction susceptible de contrarier le basculement de cette lèvre, le basculement n'intervenant par conséquent que lorsque la dépression régnant dans la chambre de pression a atteint une valeur apréciable.

Le brevet US-A-2 793 501 décrit un générateur de pression déterminant une dépression dans la chambre de travail pendant le retour du piston à sa position de repos. Le fluide de réalimentation passe alors, à titre principal par la lèvre extérieure d'une coupelle présentant une section radiale sensiblement en forme d'un U ouvert vers la chambre de pression. Pour équi-librer les pressions au repos, une ouverture est pratiquée dans le piston pour mettre en communication le réservoir de fluide et la chambre de pression par l'intermédiaire d'une chambre complémentaire déterminée par une bague métallique disposée sous la coupelle.

Une telle disposition donne un caractère d'usure à la coupelle dont la fonction d'étanchéité est donc réduite dans le temps.

La présente invention se propose de réaliser un générateur de pression pour lequel toute dépression éventuelle dans la chambre de pression est limitée à une très faible valeur, sans modifier les autres fonctions d'un tel générateur.

L'invention se rapporte donc à un générateur de pression du type comprenant un boîtier muni d'une cavité dans laquelle coulisse un piston susceptible de coopérer, lors d'une mise en oeuvre du générateur, avec une coupelle annulaire d'étanchéité montée fixe par rapport au boîtier pour diviser la cavité en une chambre de pression et une chambre d'alimentation basse pression, la coupelle présentant une section radiale sensiblement en forme d'un U ouvert vers la chambre de pression et présentant une branche interne et une branche périphérique, la branche périphérique coopérant de manière étanche avec la paroi de la cavité et la branche interne étant susceptible de coopérer de manière étanche avec la surface extérieure du piston, la branche périphérique consistant en une lèvre susceptible de se dégager, par basculement, de la paroi interne de la cavité lorsque la pression régnant dans la chambre de pression est inférieure à celle qui règne dans la chambre d'alimentation, la lèvre étant située dans un passage de dérivation reliant les chambres précitées. Le générateur comprend d'une part un épaulement radial fixe par rapport au boîtier et contre lequel prend appui la coupelle par l'intermédiaire d'une face d'appui située à l'opposé de la chambre de pression, et d'autre part une projection cylindrique également fixe par rapport au boîtier et contre laquelle prend appui la coupelle par l'intermédiaire d'une deuxième surface d'appui située entre lesdites branches précitées, des ouvertures traversant radialement la projection cylindrique. La chambre de pression est en communication avec la chambre d'alimentation basse pression lorsque le piston est en position de repos et en isolation de cette chambre lorsque le piston est déplacé à l'intérieur de la chambre de pression.

Selon l'invention, dans la position de repos du générateur, l'extrémité du piston est dégagée de la coupelle annulaire pour réaliser cette communication, et la branche interne de la coupelle d'étanchéité est confinée dans un logement sensiblement complémentaire délimité par l'épaulement radial, par une surface interne de la projection cylindrique, par une surface radiale adjacente à cette dernière, et la surface externe du piston lorsque le générateur n'est pas en position de repos.

On comprendra mieux à la lecture de la description qui va suivre que grâce à une telle caractéristique, toute dépression risquant d'apparaître dans la chambre de pression est limitée à une très faible valeur, le basculement de la lèvre périphérique de la coupelle n'étant pas contrarié par les déplacements du piston, puisque ce dernier n'est pas en contact avec cette lèvre.

L'invention sera maintenant décrite en se référant aux dessins annexés dans lesquels:

La Figure 1 est une vue en coupe longitudinale d'un générateur de pression selon l'invention.

La Figure 2 est une vue agrandie de la partie encadrée de la Figure 1 illustrant les éléments du générateur dans leurs positions de repos;

La Figure 3 est une vue agrandie, similaire à celle de la Figure 2, illustrant les éléments du générateur lors d'une course de compression et,

La Figure 4 est une vue agrandie, similaire à celles des Figures 2 et 3, illustrant les éléments du générateur lors d'une course de relâchement.

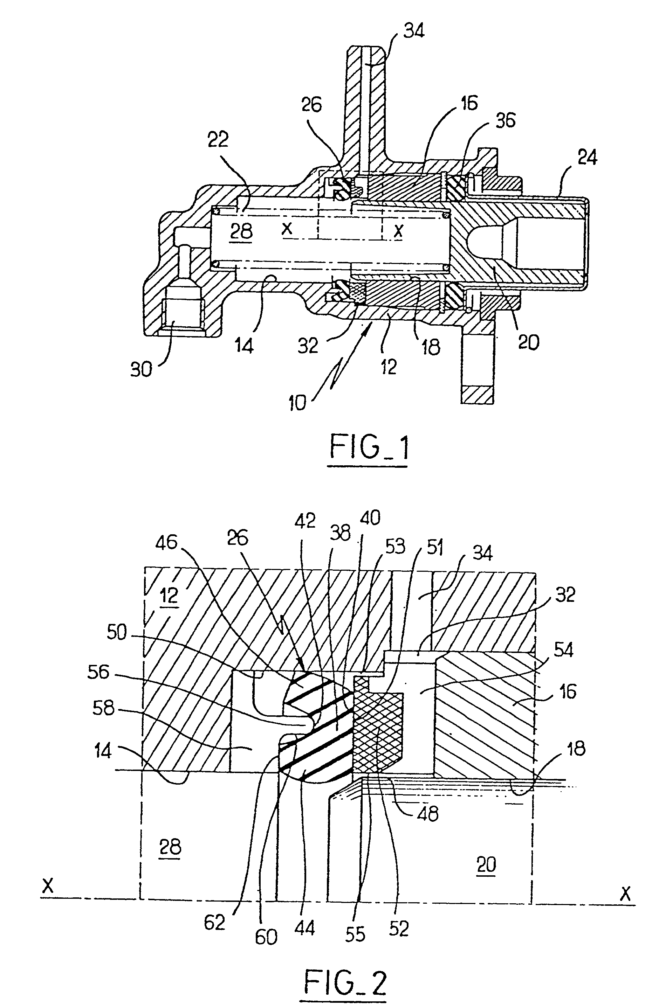

Si l'on considère la Figure 1, un générateur de pression, désigné par la référence générale 10, comprend un boîtier 12, pourvu d'une cavité à gradins 14. Dans la partie de plus grand diamètre de la cavité 14 est montée une douille 16 percée d'un alésage 18 dans lequel coulisse un piston 20. Ce dernier est rappelé élastiquement par un ressort 22 en butée sur une collerette 24 solidaire du boîtier 12, ce que définit une position de repos pour le piston 20. Une coupelle annulaire d'étanchéité 26 coopère avec la douille 16 et le boîtier 12 d'une manière qui sera décrite en détail en se rérérant à la Figure 2. Le piston 20, lorsqu'il est déplacé de sa position de repos, et la coupelle 26 coopèrent pour diviser la cavité 14 en une chambre de pression 28, prévue pour être reliée à un circuit de service, non représenté, au moyen d'un orifice de sortie 30, et en une chambre d'alimentation 32, prévu pour être reliée à un réservoir, non représenté, au moyen d'un orifice d'entrée 34. Un joint d'étanchéité 36, interposé entre la douille 16, la collerette 24, le piston 20 et la cavité 14 assure la fermeture étanche de la chambre d'alimentation. Enfin un ensemble mécanique tel qu'un dispositif à pédale, non représenté. permet de déplacer le piston 20 vers l'intérieur de la chambre de pression 28.

La Figure 2 est une vue agrandie de la partie encadrée de la Figure 1. On retrouve à cette Figure les éléments qui viennent d'être décrits ainsi que le détail de la coupelle annulaire d'étanchéité 26 et de son montage,

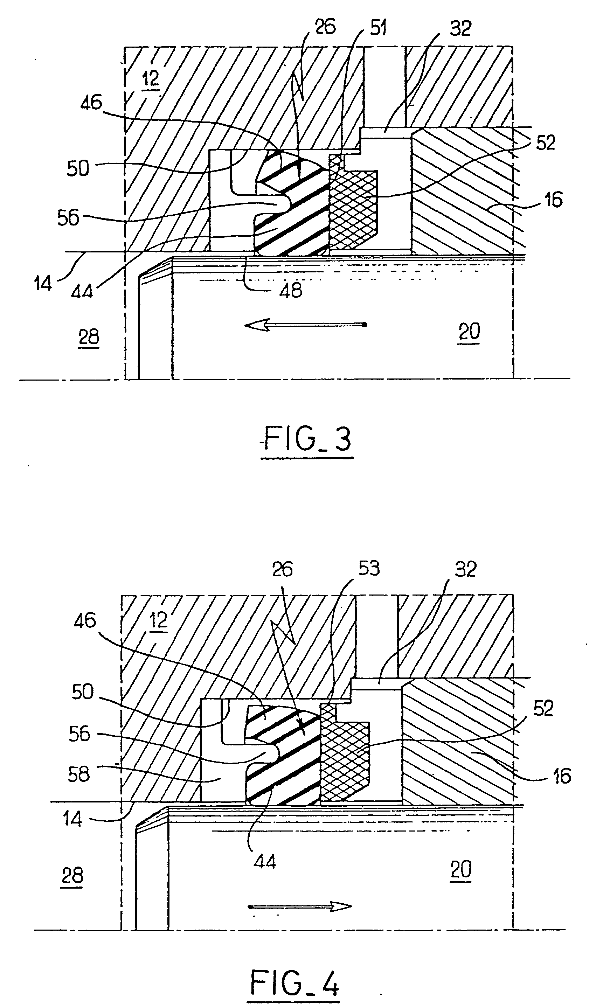

La coupelle 26 a une section radiale sensiblement en forme d'un U ouvert vers la chambre de pression 28; elle comprend une partie de base 38 comportant une face d'appui 40 à l'opposé de la chambre de pression. Depuis la partie de base 38 s'étendent, comme représenté sur la Figure 2, une branche interne 44 et une branche périphérique 46, la première étant, comme on le verra lors de la description du fonctionnement du générateur et qui se réfère aux Figures 3 et 4, susceptible de coopérer de manière étanche avec la surface extérieure 48 du piston 20, tandis que la seconde coopère de manière étanche avec la paroi interne 50 de la cavité 14.

De plus, selon le mode de réalisation préférentiel ici décrit, la branche périphérique 46 consiste en une lèvre inclinée vers l'extérieur par rapport à l'axe XX de la coupelle, cette lèvre pouvant basculer par rapport à la partie de base 38 et, ainsi, se dégager de la paroi 50 de la cavité lorsqu'une différence de pression apparaît de part et d'autre de la lèvre.

La coupelle 26, comme représenté aux Figures, prend appui d'une part sur un épaulement radial 51 d'une bague annulaire 52, elle même en appui sur la douille 16, par l'intermédiaire de sa face d'appui 40, et d'autre part sur une projection cylindrique 56, soit venue de matière avec le boîtier soit constituée par un élément séparé, par l'intermédiaire d'une seconde surface d'appui 42, située entre les branches 44 et 46.

On remarquera enfin que la branche interne 44 de la coupelle 26 est confinée dans un logement sensiblement complémentaire délimité par la surface externe 48 du piston (Figures 3 et 4), par la surface interne 60 de la projection 56 et par une surface radiale 62 adjacente à cette dernière.

La bague annulaire 52 ménage un jeu radial périphérique 53 par rapport à la paroi 50 ainsi qu'un jeu radial interne 55 par rapport à la surface externe 48 du piston 20. Elle comporte un ou plusieurs passages radiaux 54. De la sorte, la chambre d'alimentation 32 est mise en communication avec l'alésage 18 d'une part et avec le volume adjacent à la lèvre 46 d'autre part. De même, la projection cylindrique 56 comporte une ou plusieurs ouvertures radiales 58 permettant un libre passage de fluide de part et d'autre de la projection cylindrique 56. Par le fait, le lèvre 46 est située dans un passage de dérivation comprenant le jeu radial 53 et les ouvertures 58.

Le fonctionnement du générateur selon l'invention va maintenant être expliqué en se référant aux Figures 2, 3 et 4.

Au repos, comme représenté à la Figure 2, l'extrémité du piston 20 est dégagée de la coupelle 26, de sorte qu'il existe une communication entre la chambre d'alimentation 32 et la chambre de pression 28 via les passages radiaux 54, de la bague 52 et le jeu radial interne 55.

Lorsque le piston 20 est déplacé vers l'intérieur de la chambre de pression 28, comme représenté à la Figure 3, la coupelle d'étanchéité 26 coopère de manière étanche à la fois avec la surface extérieure 48 du piston 20 et avec la paroi intérieure 50 de la cavité 14. La chambre de pression 28 est alors isolée de la chambre d'alimentation 32, et le fluide pressurisé dans la chambre de pression est délivré, via l'orifice de sortie 30, au circuit de service non représenté. La pression est également utilisée pour plaquer les branches interne 44 et périphérique 46 de la coupelle 26 respectivement contre la surface extérieure du piston et la paroi intérieure de la cavité et parfaire l'étanchéité entre chambre de pression 28 et chambre d'alimentation 32.

Lorsque cesse l'effort appliqué au piston 20, le ressort 22 repousse ce dernier en direction de la collerette 24 tandis que le fluide s'écoule en retour depuis le circuit de service vers la chambre de pression 28 via l'orifice 30.

Il peut se produire que ce retour de piston soit plus rapide que le retour du fluide depuis le circuit de service, et que la pression qui règne dans la chambre de pression chute momentanément au-dessous de la pression atmosphérique qui règne dans la chambre d'alimentation.

Dans cette situation, illustrée à la Figure 4, dès qu'apparaît une légère différence entre les pressions qui règnent de part et d'autre de la lèvre 46, cette différence de pression provoque le basculement de la lèvre 46 en éloignement par rapport à la paroi 50 et la mise en communication de la chambre d'alimentation avec la chambre de pression via les ouvertures 58 et le jeu radial périphérique 53, le déplacement en recul du piston 20 n'ayant alors aucune influence contraire sur ce basculement de la lèvre 46.

En addition, le confinement de la branche intérieure 44 de la coupelle 26 permet de réduire le risque d'un basculement opposé de cette branche intérieure, sous l'effet de la différence de pression précitée, qui risquerait d'entraver le basculement souhaité de la lèvre 46.

## Revendications

1. Générateur de pression du type comprenant un boîtier (12) muni d'une cavité (14) dans laquelle coulisse un piston (20) susceptible de coopérer, lors d'une mise en oeuvre du générateur, avec une coupelle annulaire (26) d'étanchéité montée fixe par rapport au boîtier pour diviser la cavité en une chambre de pression (28) et une chambre d'alimentation (32) basse pression, la coupelle présentant une section radiale sensiblement en forme d'un U ouvert vers la chambre de pression et présentant une branche interne (44) et une branche périphérique (46), la branche périphérique coopérant de manière étanche avec la paroi (50) de la cavité et la branche interne étant susceptible de coopérer de manière étanche avec la surface extérieure (48) du piston, la branche périphérique (46) consistant en une lèvre, susceptible de se dégager, par basculement, de la paroi interne (50) de la cavité lorsque la pression régnant dans la chambre de pression (28) est inférieure à celle qui règne dans la chambre d'alimentation (32), la lèvre étant située dans un passage de dérivation reliant les chambres précitées, le générateur comprenant d'une part un épaulement radial (51) fixe par rapport au boîtier (12) et contre lequel prend appui la coupelle (26) par l'intermédiaire d'une face d'appui (40) située à l'opposé de la chambre de pression (28), et d'autre part une projection cylindrique (56) également fixe par rapport au boîtier et contre laquelle prend appui la coupelle par l'intermédiaire d'une deuxième surface d'appui (42) située entre lesdites branches précitées, des ouvertures (58) traversant radialement la projection cylindrique, la dite chambre de pression (28) étant en communication avec la dite chambre d'alimentation (32) basse pression lorsque le dit piston (20) est en position de repos et en isolation de la dite chambre (32) lorsque le piston (20) est déplacé à l'intérieur de la dite chambre de pression (28), le dit générateur étant caractérisé en ce que dans la position de repos du générateur, l'extrémité du piston (20) est dégagée de la coupelle annulaire (26) pour réaliser la dite communication ; et que la branche interne (44) de la coupelle d'étanchéité est confinée dans un logement sensiblement complémentaire délimité par l'épaulement radial (51), par une surface interne (60) de la projection cylindrique, par une surface radiale (62) adjacente à cette dernière, et la surface externe (48) du piston (20) lorsque ledit générateur n'est pas en position de repos.

## Patentansprüche

1. Druckgenerator mit einem Gehäuse (12), in dessen Innenraum (14) ein Kolben (20) gleitet, der mit einem bezüglich des Gehäuses fest angeordneten Dichtring (26) zusammenwirkt, um den Innenraum in eine Druckkammer (28) und eine Niederdruck-Einlaßkammer (32) zu unterteilen, wobei der Dichtring einen radialen Querschnitt von im wesentlichen der Form eines U besitzt, das zur Druckkammer hin offen ist und einen Innenschenkel (44) und einen Umfangsschenkel (46) aufweist, wobei der Umfangsschenkel mit der Wand (50) des Innenraumes abgedichtet zusammenwirkt und der Innenschenkel mit der Außenfläche (48) des Kolbens abgedichtet zusammenwirkt, wobei der Umfangsschenkel (46) aus einer Lippe besteht, die sich durch Kippen von der Innenwand (50) des Innenraumes lösen kann, wenn der in der Druckkammer (28) herrschende Druck kleiner als der in der Einlaßkammer (32) herrschende Druck ist, wobei die Lippe in einem die beiden Kammern verbindenden Zweigkanal angeordnet ist, wobei der Generator einerseits eine radiale Schulter (51), die bezüglich des Gehäuses (12) festgelegt ist und gegen die sich der Dichtring (26) über eine der Druckkammer (26) gegenüberliegende Anschlagfläche (40) anlegt, und ande-rerseits einen zylindrischen vorsprung (56) aufweist, der ebenfalls bezüglich des Gehäuses festgelegt ist und gegen den sich der Dichtring über eine zwischen den Schenkeln des U angeordnete zweite Anschlagfläche (42) anlegt, wobei sich durch den zylindrischen vorsprung Öffnungen (58) radial hindurch erstrecken, wobei die Druckkammer (28) mit der Niederdruck-Einlaßkammer (32) in Strömungsverbindung steht, wenn sich der Kolben (20) in der Ruhestellung befindet, und von der Kammer (32) getrennt ist, wenn der Kolben (20) in das Innere der Druckkammer (28) verschoben wird, dadurch gekennzeichnet, daß in der Ruhestellung des Generators das Ende des Kolbens (20) von dem Dichtring (26) gelöst ist, um die besagte Strömungsverbindung herzustellen, und daß der Innenschenkel (44) des Dichtrings in einem im wesentlichen komplementär ausgebildeten Sitz untergebracht ist, der von der radialen Schulter (51), einer Innenfläche (60) des zylindrischen vorsprungs, einer an dieser angrenzenden radialen Fläche (62) und der Außenfläche (48) des Kolbens (20) begrenzt wird, wenn sich der Generator nicht in der Ruhestellung befindet.

## Claims

1. Pressure generator of the type comprising a casing (12) provided with a cavity (14) in which there slides a piston (20) capable, when the generator is put into operation, of interacting with an annular sealing cup (26) mounted fixed relative to the casing to divide the cavity into a pressure chamber (28) and a low-pressure supply chamber (32), the cup having a radial cross-section substantially in the form of a U open towards the pressure chamber and having an inner branch (44) and a peripheral branch (46), the peripheral branch interacting in leakproof fashion with the wall (50) of the cavity and the inner branch being capable of interacting in leakproof fashion with the external surface (48) of the piston, the peripheral branch (46) consisting of a lip capable of disengaging, by tilting over, from the inner wall (50) of the cavity when the pressure prevailing in the pressure chamber (28) is lower than that which is prevailing in the supply chamber (32), the lip being situated in a bypass passage connecting the abovementioned chambers, the generator comprising, on the one hand, a radial shoulder (51) fixed relative to the casing (12) and against which the cup (26) bears via a bearing face (40) situated opposite the pressure chamber (28) and, on the other hand, a cylindrical projection (56) likewise fixed relative to the casing and against which the cup bears via a second bearing surface (42) situated between said abovementioned branches, openings (58) passing radially through the cylindrical projection, said pressure chamber (28) being in communication with said low-pressure supply chamber (32) when said piston (20) is in the rest position and isolated from said chamber (32) when the piston (20) is displaced inside said pressure chamber (28), said generator being characterized in that, in the rest position of the generator, the end of the piston (20) is disengaged from the annular cup (26) in order to effect said communication; and in that the inner branch (44) of the sealing cup is confined in a substantially complementary housing delimited by the radial shoulder (51), by an inner surface (60) of the cylindrical projection, by a radial surface (62) adjacent to the latter, and the outer surface (48) of the piston (20) when said generator is not in the rest position.

FIG_1

FIG_2

FIG_3

FIG_4